# EUROPEAN PATENT APPLICATION

(11) **EP 4 507 076 A1**
(43) Date of publication of application: **12.02.2025**
(21) Application number: 24192380.4
(22) Date of filing: 01.08.2024
(51) Int. Cl.: H01M 50/103, H01M 50/15, H01M 50/176, H01M 50/184, H01M 50/188, H01M 50/209, H01M 50/503, H01M 50/505, H01M 50/516, H01M 50/528, H01M 50/55, H01M 50/553

(54) **ELECTRIC STORAGE DEVICE AND ELECTRIC STORAGE UNIT**

(30) Priority: 10.08.2023 JP 2023131040
(71) Applicant: Prime Planet Energy & Solutions, Inc., Chuo-ku Tokyo 103-0022 (JP)
(72) Inventor: OSHIMA, Kazuki, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

The herein disclosed electric storage device 1 includes a case, an insulating material, and a current collector. The current collector is arranged to cover a terminal attachment hole via an insulating material 30, is joined to the insulating material. The current collector includes a terminal part exposed to an outer side of the case through the terminal attachment hole, and can be electrically connected to an outside member. Then, the terminal part is positioned at an inward more than an outer surface of the case. In accordance with such a configuration, it is possible to implement forming an electrically conductive passage to an outside of the case and hermetically sealing an inside of the case, and it is possible to enhance the loading efficiency of the electric product.

## Description

### BACKGROUND

### 1. Technical Field

The present disclosure relates to an electric storage device and an electric storage unit.

### 2. Description of the Related Art

The electric storage device, such as lithium ion secondary battery, is used as a power supply of various electric products. An example of this electric storage device (a sealed battery) is disclosed on Japanese Patent Application Publication No. 2021-86813. The electric storage device described in the above cited document includes a case member having a terminal attachment hole, an electrode assembly accommodated at an inside of the case member, an electrical collector terminal, and an insulating material. Then, the electrical collector terminal includes an electrode assembly connecting part that is arranged inside the case member and that is connected to the electrode assembly, an outside connecting part that is arranged outside the case member, and a shaft part that is positioned between the electrode assembly connecting part and the outside connecting part and that is inserted into the terminal attachment hole. In addition, at least one of the electrode assembly connecting part and the outside connecting part is configured to have a size capable of being inserted into the terminal attachment hole. In addition, the insulating material is integrally molded with the case member and the electrical collector terminal to cover a portion between the terminal attachment hole and the electrical collector terminal. The electric storage device described in the above cited document is explained to have an electrode that can be easily taken out to an outside.

### SUMMARY

As described in Japanese Patent Application Publication No. 2021-86813, the general electric storage device has the electrical collector terminal whose one part (an outside connecting part) protrudes to the outside of the case. On the other hand, a loading space of the electric storage device regarding an electric product is limited. Thus, the outside connecting part protruding to the case outside causes reducing a loading efficiency of the electric storage device regarding the electric product.

For the above described problem, an electric storage device including a below described configuration would be provided.

The herein disclosed electric storage device includes an electrode assembly, a case accommodating an electrode assembly and having a terminal attachment hole, an insulating material continuously covering a circumferential wall of a terminal attachment hole and a circumferential edge part of a terminal attachment hole in a circumferential direction and joined to a circumferential edge part of a terminal attachment hole, and a current collector electrically connected to an electrode assembly inside of a case. The current collector is arranged to cover the terminal attachment hole via the insulating material. The current collector is joined to the insulating material. The current collector comprises a terminal part that is exposed to an outer side of the case through the terminal attachment hole and that is capable of being electrically connected to an outside member. The terminal part is positioned at an inward more than an outer surface of the case. The terminal attachment hole is sealed by the insulating material and the current collector.

In an electric storage device including the above described configuration, one part (a terminal part) of a current collector accommodated in a case is exposed to an outer side of a case through a terminal attachment hole. An upper surface of this terminal part is positioned at an inward more than an outer surface of a case. Then, a terminal attachment hole of a case is sealed by an insulating material and a terminal part. In accordance with such a configuration, even if an electrode terminal (an outside connecting member) protruding to a case outside is not provided, it is possible to form an electrically conductive passage toward a case outside and to implement hermetically sealing a case inside. Thus, the herein disclosed electric storage device can contribute in enhancing the loading efficiency of the electric product.

### BRIEF DESCRIPTION OF THE DRAWINGS

FIG. 1 is a perspective view that schematically shows an electric storage device in accordance with a first embodiment.
FIG. 2 is an enlarged cross section view that schematically shows a structure of the electric storage device in accordance with the first embodiment at a vicinity of a terminal attachment hole.
FIG. 3 is an enlarged cross section view that is to explain a procedure for manufacturing an insulating material shown in FIG. 2.
FIG. 4 is a perspective view that schematically shows an electric storage unit in accordance with the first embodiment.
FIG. 5 is an enlarged cross section view that schematically shows a connection structure of the electric storage unit shown in FIG. 4.
FIG. 6 is an enlarged cross section view that schematically shows the structure of the electric storage device in accordance with a second embodiment at the vicinity of the terminal attachment hole.
FIG. 7 is an enlarged cross section view that schematically shows the structure of the electric storage device in accordance with a third embodiment at the vicinity of the terminal attachment hole.
FIG. 8 is an enlarged cross section view that schematically shows the structure of the electric storage device in accordance with a fourth embodiment at the vicinity of the terminal attachment hole.
FIG. 9 is a cross section view that shows an example of a bus bar capable of being used in the fourth embodiment.

### DETAILED DESCRIPTION

Below, an embodiment of the herein disclosed technique would be explained while referring to figures. Incidentally, the matters being other than matters particularly mentioned in this specification and being required for practicing the present disclosure (for example, a detailed configuration of an electrode assembly, or the like) can be grasped as design matters of those skilled in the art based on the related art in the present field. The herein disclosed technique can be executed based on the contents disclosed in the present specification, and on the technical common sense in the present field. In addition, a wording "A to B" representing a range in the present specification semantically covers not only a meaning equal to or more than A and not more than B, but also meanings "more than A" and "less than B".

Incidentally, a term "electric storage device" in the present specification represents a concept semantically covering an apparatus in which, by moving a charge carrier between a pair of electrodes (a positive electrode and a negative electrode), a charge and discharge response is generated. In other words, the electric storage device on the herein disclosed technique semantically covers not only a secondary battery, such as lithium ion secondary battery, nickel hydrogen battery, and nickel cadmium battery, but also a capacitor, such as lithium ion capacitor, and electric double layer capacitor, or the like.

### <First embodiment>

### 1. Configuration of electric storage device

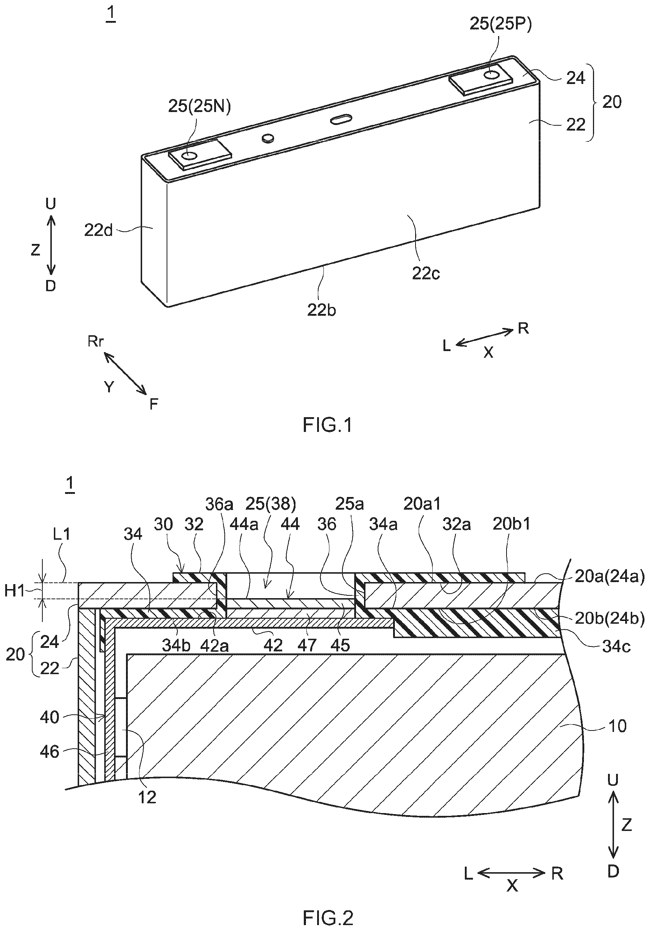

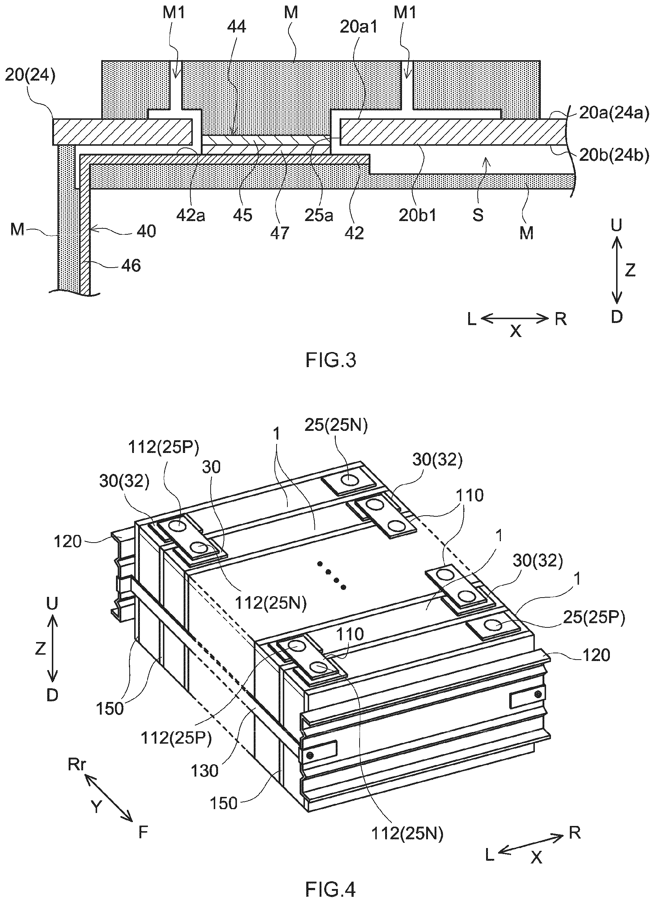

Below, while referring to FIG. 1 to FIG. 3, one embodiment of an electric storage device disclosed herein will be described. FIG. 1 is a perspective view that schematically shows the electric storage device in accordance with a first embodiment. FIG. 2 is an enlarged cross section view that schematically shows a structure of the electric storage device in accordance with the first embodiment at a vicinity of a terminal attachment hole. FIG. 3 is an enlarged cross section view that is to explain a procedure for manufacturing an insulating material shown in FIG. 2. Incidentally, reference signs L, R, F, Rr, U, and D in figures respectively represent left, right, front, rear, up, and down. In addition, reference signs X, Y, and Z in figures respectively represent a width direction, a depth direction, and a height direction of the electric storage device. However, these are merely directions defined for convenience sake of explanation, and are not to restrict a disposed aspect of the herein disclosed electric storage device.

As shown in FIG. 1 and FIG. 2, the electric storage device 1 in accordance with the present embodiment includes an electrode assembly 10, a case 20 that is configured to accommodate the electrode assembly 10 and that has a terminal attachment hole 25, an insulating material 30 that is configured to continuously cover a circumferential wall 25a of the terminal attachment hole 25 and circumferential edge parts 20a1, 20b1 of the terminal attachment hole 25 in a circumferential direction and that is joined to the circumferential edge parts 20a1, 20b1 of the terminal attachment hole 25, and a current collector 40 that is electrically connected to the electrode assembly 10 at an inside of the case 20. Then, the current collector 40 is arranged to cover the terminal attachment hole 25 via the insulating material 30, and is joined to the insulating material 30. In addition, the current collector 40 is exposed to an outer side of the case 20 through the terminal attachment hole 25, and includes a terminal part 44 capable of being electrically connected to an outside member. Then, regarding the electric storage device 1 in accordance with the present embodiment, the terminal part 44 is positioned at an inward more than an outer surface 20a of the case 20, and the terminal attachment hole 25 is sealed by the insulating material 30 and the current collector 40. In accordance with such a configuration, it is possible, even if an electrode terminal (an outside connecting member) protruding to the outside of the case is not provided, to implement forming an electrically conductive passage to the outside of the case 20 and hermetically sealing the inside of the case 20. As this result, it is possible to contribute in enhancing the loading efficiency of the electric product. Below, the electric storage device 1 in accordance with the present embodiment would be particularly explained.

### (1) Electrode assembly 10

The electrode assembly 10 is a power generating element of the electric storage device 1. The electric storage device 1 in accordance with the present embodiment includes one electrode assembly 10. However, the number of the electrode assembly, which is not particularly restricted, might be plural. In addition, as a detailed illustration is omitted, the electrode assembly 10 includes a positive electrode plate, a negative electrode plate, and a separator. The positive electrode plate includes a positive electrode substrate that is an electrically conductive metal foil (an aluminum foil, or the like), and includes a positive electrode active material layer that is imparted on a surface of the positive electrode substrate. On the other hand, the negative electrode plate includes a negative electrode substrate that is an electrically conductive metal foil (a copper foil, or the like), and includes a negative electrode active material layer that is imparted on a surface of the negative electrode substrate. Then, the separator is an insulation sheet disposed between the positive electrode plate and the negative electrode plate. Incidentally, as a material of each of members (the positive electrode plate, the negative electrode plate, the separator, and the like) configuring the electrode assembly 10, it is possible without particular restriction to use a material capable of being used for a general electric storage device, it is not to restrict the herein disclosed technique, and thus a detailed explanation of it is omitted.

In addition, a particular structure of the electrode assembly 10 is not particularly restricted. For example, the electrode assembly 10 might be a wound electrode assembly that is configured by winding a laminate body including the positive electrode plate, the negative electrode plate, and the separator. In addition, the electrode assembly 10 might be a laminate type electrode assembly in which plural positive electrode plates, plural negative electrode plates, and plural separators are laminated. However, even if any of the structures are applied, connecting tabs 12 are formed at both side edges of the electrode assembly 10 in a width direction X. One of the connecting tabs 12 is a positive electrode tab that is electrically connected to the positive electrode plate. This positive electrode tab is, for example, configured by bundling the positive electrode substrates on which no positive electrode active material layer is applied to coat. In addition, the other one of the connecting tabs 12 is a negative electrode tab that is electrically connected to the negative electrode plate. This negative electrode tab is configured by bundling the negative electrode substrates on which no negative electrode active material layer is applied to coat. Although details are described later, these connecting tabs 12 are electrically connected to the current collector 40.

### (2) Case 20

The case 20 is a container that is configured to accommodate the electrode assembly 10 and that includes the terminal attachment hole 25. In particular, the case 20 is the container that has an internal space and that is formed in a flat box shape. Then, the electrode assembly 10 is accommodated at an internal space of the case 20. Incidentally, as the illustration is omitted, an electrolyte is also accommodated at the inside of the case 20. As the electrolyte, it is possible without particular restriction to use one capable of being used for the general electric storage device, it is not to restrict the herein disclosed technique, and thus a detailed explanation of it is omitted.

In addition, the case 20 in the present embodiment includes a case main body 22 and a sealing plate 24. The case main body 22 is a box-shaped body having an upper surface opening. As shown in FIG. 1, the case main body 22 includes a bottom part 22b that is a long rectangular plate-shaped member, a pair of first side walls 22c that extend from long sides (sides along the width direction X) of the bottom part 22b to an upward D, and a pair of second side walls 22d that extend from short sides (sides along a depth direction Y) of the bottom part 22b to the upward D. Then, on an upper surface of the case main body 22, the upper surface opening is formed that is surrounded by each of top ends of the first side walls 22c and second side walls 22d. On the other hand, the sealing plate 24 is a plate-shaped member that is formed to be rectangular and to cover the upper surface opening of the case main body 22. In particular, as shown in FIG. 2, the sealing plate 24 is fit into the upper surface opening of the case main body 22. Then, a boundary between the case main body 22 and the sealing plate 24 is joined by a laser welding, or the like. Incidentally, it is preferable that the case 20 (the case main body 22 and the sealing plate 24) is a metal member having a strength equal to or more than a predetermined level. As one example of a material of the case 20, it is possible to use a metal material, such as aluminum and aluminum alloy.

In addition, as described above, the terminal attachment hole 25 is formed on the case 20. This terminal attachment hole 25 is a penetration hole that is configured to penetrate the case 20. This terminal attachment hole 25 is an opening part for forming an electrically conductive passage that reaches from the electrode assembly 10 inside the case 20 to the outside of the case 20. As shown in FIG. 1, the terminal attachment hole 25 in the present embodiment is an opening part which is formed to have a circular shape in a plane view. However, the flat surface shape of the terminal attachment hole, which is not particularly restricted, might be a square shape. Additionally, regarding the electric storage device 1 in accordance with the present embodiment, 2 terminal attachment holes 25 are formed on the sealing plate 24 of the case 20. In particular, the terminal attachment holes 25 are respectively formed at both ends of the sealing plate 24 in the width direction X. Then, one of the terminal attachment holes 25 functions as a positive electrode terminal attachment hole 25P that forms the electrically conductive passage with respect to the positive electrode of the electrode assembly 10. In addition, the other one of terminal attachment holes 25 functions as a negative electrode terminal attachment hole 25N that forms the electrically conductive passage with respect to the negative electrode of the electrode assembly 10. Below, explanation would be performed while a structure at a periphery of the negative electrode terminal attachment hole 25N is used as an example.

### (3) Insulating material 30

The insulating material 30 is configured to continuously cover the circumferential wall 25a of the terminal attachment hole 25 and circumferential edge parts 20a1, 20b1 of the terminal attachment hole 25 in a circumferential direction and to be joined to the circumferential edge parts 20a1, 20b1 of the terminal attachment hole 25. This insulating material 30 is a member for inhibiting conduction to the case 20. In particular, to the inside of the case 20, the current collector 40 is attached for forming the electrically conductive passage from the electrode assembly 10 to the outside of the case 20. In addition, to the outside of the case 20, an outside member (the bus bar 110 in FIG. 4, or the like) is attached for connecting the electric storage device 1 and an electrical equipment. By disposing the insulating material 30 between these conductive member and case 20, it is possible to inhibit the conduction to the case 20. Incidentally, the insulating material 30 is configured with an insulating resin, such as polypropylene resin, polyphenylene sulfide resin, polyamide resin, polyacetal resin, and polyimide resin. In addition, the insulating material 30 includes an opening part 38 that is configured to penetrate this insulating material 30. The insulating material 30 is molded to make this opening part 38 and the terminal attachment hole 25 be overlapped. In other words, the insulating material 30 is arranged not to cover the terminal attachment hole 25 of the case 20.

Incidentally, the insulating material 30 in the present embodiment is manufactured by insertion molding. In this insertion molding, at first, as shown in FIG. 3, the current collector 40 and a mold M are attached to the sealing plate 24. At that time, a positional relation of respective members is adjusted to generate a cavity S whose shape corresponds to the insulating material 30 planned to be manufactured. Next, through an injection hole M1 of the mold M, an inside of the cavity S is filled with a resin material. Then, by curing this resin material, the insulating material 30 whose shape corresponds to the cavity S is manufactured. By manufacturing the insulating material 30 with insertion molding as described above, the sealing plate 24 and the current collector 40 are integrated via the insulating material 30. By doing this, the insulating material 30 continuously covers the circumferential wall 25a of the terminal attachment hole 25 and the circumferential edge parts 20a1, 20b1 of the terminal attachment hole 25 in the circumferential direction so as to be joined to the circumferential edge parts 20a1, 20b 1 of the terminal attachment hole 25. Then, the insulating material 30 after the insertion molding includes an outside insulating part 32, an inside insulating part 34, and a hole inside insulating part 36. Below, a particular shape of each portion will be described.

The insulating material 30 includes the outside insulating part 32 that is joined to the circumferential edge part 20a1 of the terminal attachment hole 25 on the outer surface 20a of the case 20. This outside insulating part 32 is a member configured to inhibit the conduction of the outside member (the bus bar 110, or the like) and the case 20. In particular, the outside insulating part 32 is a plate-shaped portion arranged along the outer surface 20a (the upper surface 24a of the sealing plate 24) of the case 20. Then, a lower surface 32a of the outside insulating part 32 is joined to the outer surface 20a of the case 20 by insertion molding. As shown in FIG. 4, by providing this outside insulating part 32, it is possible to inhibit the outside member from coming into contact with the case 20(the sealing plate 24) when the outside member (the bus bar 110) is connected to the electric storage device 1. Incidentally, a thickness of the outside insulating part 32 is preferably equal to or more than 0.5 mm, further preferably equal to or more than 1.0 mm, or in particular preferably equal to or more than 2.0 mm. By doing this, it is possible to further suitably inhibit the conduction of the outside member and the case 20. On the other hand, the thickness of the outside insulating part 32 is preferably equal to or less than 4.0 mm, or further preferably equal to or less than 3.0 mm. By doing this, a height size of the electric storage device 1 can be further decreased, and thus it is possible to further enhance the loading efficiency of the electric storage device regarding the electric product.

In addition, the insulating material 30 includes the inside insulating part 34 that is joined to the circumferential edge part 20b 1 of the terminal attachment hole 25 on the inner surface 20b of the case 20. This inside insulating part 34 is a member that is configured to inhibit the conduction of the later described current collector 40 and the case 20. In particular, the inside insulating part 34 is a plate-shaped portion disposed between the inner surface 20b (the lower surface 24b of the sealing plate 24) of the case 20 and the joint part 42 of the current collector 40. Then, the upper surface 34a of the inside insulating part 34 is joined to the inner surface 20b of the case 20 by the insertion molding. Incidentally, the thickness of the inside insulating part 34 is preferably equal to or more than 0.1 mm, further preferably equal to or more than 0.3 mm, or in particular preferably equal to or more than 0.5 mm. By doing this, it is possible to further suitably inhibit the conduction of the current collector 40 and the sealing plate 24. On the other hand, the thickness of the inside insulating part 34 is preferably equal to or less than 2.0 mm, or further preferably equal to or less than 1.0 mm. By doing this, an accommodation space of the electrode assembly 10 inside the case 20 becomes larger, and thus it is possible to contribute in enhancing a performance of the electric storage device 1.

Then, the insulating material 30 includes the hole inside insulating part 36 that is joined to the circumferential wall 25a of the terminal attachment hole 25. Although details are described later, regarding the electric storage device 1 in accordance with the present embodiment, the current collector 40 and the bus bar 110 are connected at the inside of the terminal attachment hole 25. The hole inside insulating part 36 is configured to inhibit these conductive members from directly coming into contact with the case 20 (the sealing plate 24). In particular, the hole inside insulating part 36 is a cylindrical portion that extends along a height direction Z. This hole inside insulating part 36 is arranged at the inside of the terminal attachment hole 25 of the case 20. Then, an outer periphery 36a of the hole inside insulating part 36 is joined to the circumferential wall 25a of the terminal attachment hole 25. Additionally, regarding the insulating material 30 in the present embodiment, the outside insulating part 32 and the inside insulating part 34 are continuous through the hole inside insulating part 36. In other words, the outside insulating part 32, the inside insulating part 34, and the hole inside insulating part 36 are integrally molded. Incidentally, the thickness of the hole inside insulating part 36 is preferably equal to or more than 0.5 mm, further preferably equal to or more than 1.0 mm, or in particular preferably equal to or more than 2.0 mm. By doing this, it is possible to inhibit a breakage of the hole inside insulating part 36 caused by friction or heat at the time when the current collector 40 and the bus bar 110 are connected. On the other hand, the thickness of the hole inside insulating part 36 is preferably equal to or less than 4.0 mm, or further preferably equal to or less than 3.0 mm. By doing this, the size of the terminal attachment hole 25 is sufficiently secured, and thus connecting the current collector 40 and the bus bar 110 becomes easy.

In addition, the insulating material 30 in the present embodiment includes a protruding part 34c that is configured to protrude from a part (a portion at an inner side in the width direction X) of the inside insulating part 34 to a downward D. By doing this, it is possible to restrict the up and down movement of the electrode assembly 10 inside the case 20. As this result, it is possible to inhibit contact of the electrode assembly 10 and the sealing plate 24, breakage of the connecting tab 12, or the like. Incidentally, the thickness (a protruding amount) of the protruding part 34c is preferably equal to or more than 2.0 mm, or further preferably equal to or more than 3.0 mm. By doing this, it is possible to further suitably restrict the up and down movement of the electrode assembly 10. On the other hand, the thickness of the protruding part 34c is preferably equal to or less than 5.0 mm, or further preferably equal to or less than 4.0 mm. By doing this, it is possible to sufficiently secure the accommodation space of the electrode assembly 10 inside the case 20.

Incidentally, in the present embodiment, roughened surfaces are formed on a surface of the metal member (the sealing plate 24, and the current collector 40) coming into contact with the insulating material 30 by rough surface process. In particular, the surfaces on which the rough surface processing has been performed are the circumferential edge part 20a1 of the terminal attachment hole 25 on the outer surface 20a of the case 20, the circumferential edge part 20b 1 of the terminal attachment hole 25 on the inner surface 20b of the case 20, the circumferential wall 25a of the terminal attachment hole 25, and a surface of the current collector 40 (an upper surface 42a of the joint part 42) joined to the insulating material 30. By doing this, the resin material enters into a concave and convex part of the surface of each metal member when the insertion molding is performed. As this result, an anchor effect is generated, and thus it is possible to further firmly join the insulating material 30 and the metal member. Incidentally, it is enough for the roughened surface(s) is/are formed on at least one point of each surface described above. Even in that case, it is possible to suitably enhance a joint strength of the insulating material 30 and the metal member. In addition, this rough surface processing is not to restrict the herein disclosed technique. In other words, even in a case where the rough surface processing is not performed, it is possible by the insertion molding to sufficiently integrate the insulating material 30 and the metal member.

### (4) Current collector 40

The current collector 40 is a conductive member that is electrically connected to the electrode assembly 10 at the inside of the case 20. In particular, the current collector 40 includes the inside electrical collector part 46 that is configured to extend along the height direction Z. This inside electrical collector part 46 is a plate-shaped portion that is connected to the connecting tab 12 of the electrode assembly 10. Incidentally, it is preferable that the inside electrical collector part 46 is configured with a metal material being the same kind as the connecting tab 12 which is a connecting object. For example, as described above, the negative electrode tab is configured with the negative electrode substrate that is the copper foil. In that case, it is preferable that the inside electrical collector part 46 is configured with a copper type material (a copper, a copper alloy, or the like). By doing this, it is possible to firmly connect the current collector 40 and the electrode assembly 10 at a low resistance.

In addition, the current collector 40 in the present embodiment is arranged to cover the terminal attachment hole 25 via the insulating material 30. And the current collector 40 is joined to the insulating material 30. In addition, the current collector 40 includes a terminal part 44. The terminal part 44 is exposed to the outer side of the case 20 through the terminal attachment hole 25. And the terminal part 44 can be electrically connected to the outside member. Below, the current collector having the configuration described above would be particularly explained.

At first, the current collector 40 includes the joint part 42 that is a plate-shaped member being joined to the insulating material 30. This joint part 42 is joined to a lower surface 34b of the inside insulating part 34 to cover the terminal attachment hole 25 at the inside of the case 20. In furthermore particular, the joint part 42 is molded by folding and bending a top end of the inside electrical collector part 46 to be opposed to the sealing plate 24. By doing this, the joint part 42 is opposed to the inner surface 20b of the case 20, so as to sandwich the inside insulating part 34. Then, the upper surface 42a of the joint part 42 is joined to the lower surface 34b of the inside insulating part 34 by the insertion molding. As this result, the lower end part of the terminal attachment hole 25 is covered by the joint part 42.

The terminal part 44 is exposed to the outer side of the case 20 through the terminal attachment hole 25. By doing this, the outside member, such as bus bar, and the current collector 40 can be electrically connected. In particular, as shown in FIG. 2, regarding the present embodiment, the top end of the terminal attachment hole 25 is opened. As this result, a part (the terminal part 44) of the current collector 40 is exposed to the outer side of the case 20. By doing this, it is possible to insert a part of the outside member (a connection projection 112 of the bus bar 110) from the outer side of the case 20 into the terminal attachment hole 25 (see FIG. 4). As this result, it is possible to electrically connect the current collector 40 and the outside member.

Then, the terminal part 44 of the electric storage device 1 in accordance with the present embodiment is positioned inward more than the outer surface 20a of the case 20. In other words, as shown in FIG. 2, the upper surface 44a of the terminal part 44 is arranged at a downward D side more than an outer shape line L1 being along the outer surface 20a of the case 20. By doing this, it is possible to inhibit one part of the current collector 40 from protruding to the outside of the case 20. In addition, regarding the electric storage device 1 in accordance with the present embodiment, the terminal attachment hole 25 is sealed by the insulating material 30 and the current collector 40 (the joint part 42 and the terminal part 44). By doing this, it is possible to inhibit outflow of the electrolytic solution, invasion of a foreign substance, or the like. As described above, regarding the electric storage device 1 in accordance with the present embodiment, it is possible even without providing the outside connecting part to implement forming the electrically conductive passage toward the outside of the case 20 and to implement hermetically sealing the inside of the case 20. In other words, according to the present embodiment, it is possible to delete the conductive member protruding to the outside of the case 20, and thus it is possible to implement decreasing a height size of the electric storage device 1. As this result, it is possible to enhance the loading efficiency of the electric storage device 1 of the electric product.

Incidentally, the terminal part 44 in the present embodiment is a terminal part that is formed in a convex shape and that is inserted into the terminal attachment hole 25 from the inner side of the case 20. By doing this, a position of the upper surface 44a of the terminal part 44 in the terminal attachment hole 25 is made to rise, and thus it becomes easy to connect the terminal part 44 and the outside member. In addition, by inserting the convex-shaped terminal part 44 into the terminal attachment hole 25, movement of the current collector 40 in a horizontal direction (the width direction X and the depth direction Y) is restricted. By doing this, it is also possible to suppress peel-off of a joint interface of the joint part 42 and the inside insulating part 34. Incidentally, as the position of the upper surface 44a of the terminal part 44 in the terminal attachment hole 25 is made to rise further, connecting the terminal part 44 and the outside member tends to become easier. From a perspective described above, a distance H1 from the outer surface 20a of the case 20 to the upper surface 44a of the terminal part 44 is preferably equal to or less than 2.0 mm, further preferably equal to or less than 1.0 mm, or furthermore preferably equal to or less than 0.5 mm. In addition, the upper surface 44a of the terminal part 44 might be at a height approximately similar to the outer surface 20a of the case 20 (in other words, the distance H1 is 0 mm). In that case, connecting the terminal part 44 and the outside member furthermore becomes easier.

In addition, as described above, the current collector 40 shown in FIG. 2 includes the joint part 42 that is a plate-shaped member joined to the insulating material 30. At that time, the convex-shaped terminal part 44 shown in FIG. 2 is a columnar member that is joined to the upper surface 42a of the joint part 42. By doing this, it is possible to sufficiently secure the thickness of the terminal part 44. As this result, it is possible to secure a suitable welding depth when the terminal part 44 and the outside member are connected by laser welding, or the like. Additionally, in a case where this kind of configuration is applied, it is also possible to freely select a material of the terminal part 44, without being affected by materials of the other portions (the joint part 42 and the inside electrical collector part 46).

For example, while shown in FIG. 2, it is possible as the terminal part 44 to use a clad material including a first layer 47 and a second layer 45. The first layer 47 of this terminal part 44 is joined to the upper surface 42a of the joint part 42, and is a layer configured with the same kind of metal as the joint part 42. By doing this, it is possible to firmly join the terminal part 44 and the joint part 42. On the other hand, the second layer 45 is exposed to the outer side of the case 20 through the terminal attachment hole 25, and is a layer configured with a metal different from the first layer 47. By doing this, it is possible to arrange the metal, which is easily connected to the outside member, on the upper surface 44a of the terminal part 44. For example, regarding the current collector 40 at the negative electrode side, in consideration of a connection property with the negative electrode tab, a copper type material is used on the inside electrical collector part 46 and the joint part 42. On the other hand, regarding a construction of the later described electric storage unit 100, in consideration of the connection property with the joint part of the current collector at the positive electrode side, an aluminum type material is used on the outside member (the bus bar 110). In that case, it is good that the first layer 47 of the terminal part 44 is configured with the copper and the second layer 45 is configured with the aluminum. By doing this, it is possible to form the joint interface with the copper and the copper between the terminal part 44 and the joint part 42, and additionally form the joint interface with the aluminum and the aluminum between the terminal part 44 and the bus bar 110. As this result, it is possible to form the electrically conductive passage from the electrode assembly 10 to the bus bar 110 which is strong at the low resistance.

### 2. Configuration of electric storage unit

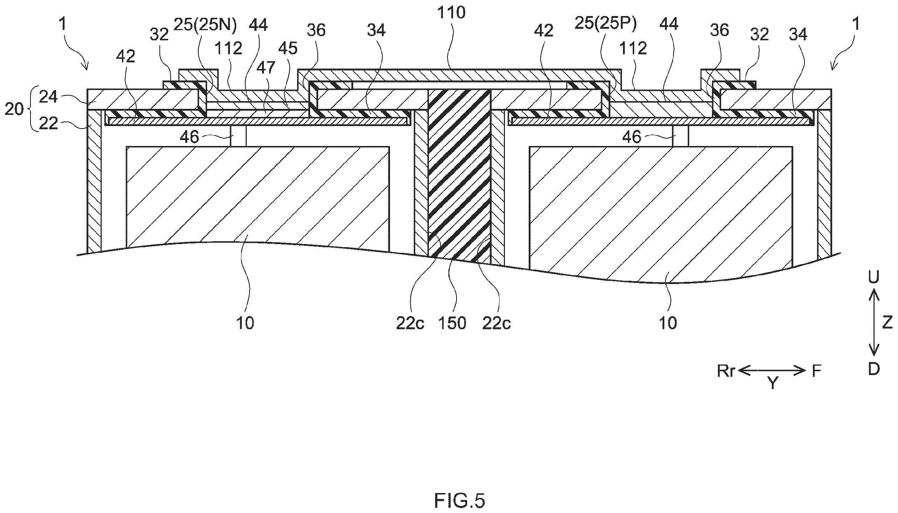

Next, the electric storage unit 100 constructed with the electric storage device 1 including the above described configuration will be described. FIG. 4 is a perspective view that schematically shows the electric storage unit in a first embodiment. FIG. 5 is an enlarged cross section view that schematically shows a connection structure of the electric storage unit shown in FIG. 4.

The electric storage unit 100 shown in FIG. 4 includes plural electric storage devices 1. In particular, regarding this electric storage unit 100, plural electric storage devices 1 are aligned along the depth direction Y to make the first side walls 22c of the cases 20 be opposed to each other. Incidentally, a number of the electric storage devices 1 contained in the electric storage unit 100 is not particularly specified, and is suitably changed in accordance with a purpose of the electric storage unit 100 (a requested electric power, a standard, or the like, of the electric product planned to be used). In addition, regarding the electric storage unit 100 in accordance with the present embodiment, it is not required that all of the plural electric storage devices 1 have the above described configuration. For example, in a case where the electric storage unit is mounted on the electric product, only a part of the plural electric storage devices does interfere with another part, and thus there might be a reason for having no choice but to reduce the height size of the whole electric storage unit. In that case, it is good that the above described configuration is applied only to the electric storage device which interferes with another part. By doing this, it is possible to enhance the loading efficiency of the electric storage device on the electric product.

In addition, at both outer sides of the electric storage unit 100 in an aligned direction (the depth direction Y), a pair of end plates 120 are arranged. The pair of end plates 120 are cross-linked to each other by a beam material for restriction 130. By doing this, it is possible to add a restriction pressure along the aligned direction onto each electric storage device 1. In addition, between the aligned respective electric storage devices 1, a buffering member 150 made of a resin is arranged. By doing this, it is possible to uniform the restriction pressure added on the electric storage device 1.

Then, this electric storage unit 100 includes plural bus bars 110 that are configured to electrically connect plural electric storage devices 1. Then, the bus bar 110 is joined to the terminal part 44 of each electric storage device 1. In particular, regarding the electric storage unit 100 shown in FIG. 4, plural electric storage devices 1 are aligned to make the positive electrode terminal attachment hole 25P of one of the electric storage devices 1 and the negative electrode terminal attachment hole 25N of the other one of the electric storage devices 1 be arranged adjacent to each other. Then, the bus bar 110 is connected to the terminal part 44 being present at the inside of each of the pair of adjacent terminal attachment holes 25. On this bus bar 110, a metal material (for example, the aluminum) which is the same kind as the terminal part 44 of the positive electrode side is used.

Additionally, as shown in FIG. 5, the bus bar 110 in the present embodiment includes a connection projection 112 that is inserted into the terminal attachment hole 25 from the outside region of the case 20 and that is connected to the terminal part 44 of the current collector 40. By doing this, the terminal part 44 and the bus bar 110 can be easily connected even in a case where the terminal part 44 is arranged at the inward (the downward D) more than the outer surface 20a of the case 20. In particular, the connection projection 112 is a portion in which a part of the bus bar 110 is folded and bent to protrude to the downward D. Then, the connection projection 112 of the bus bar 110 is inserted into the terminal attachment hole 25 from an upward U in the height direction Z. By doing this, the connection projection 112 and the upper surface 44a of the terminal part 44 come into contact with each other. In this state, laser welding is performed on the connection projection 112 and the terminal part 44. By doing this, a welding part is formed that is configured to straddle the connection projection 112 and the terminal part 44, and thus the terminal part 44 and the bus bar 110 are electrically connected.

Incidentally, the herein disclosed technique is not to restrict the outside member, connected to the electric storage device, to the bus bar 110 including the above described configuration. For example, it is possible as the outside member to use an electric wire, or the like. These outside members also can be easily inserted into the terminal attachment hole, and thus it is possible to properly connect to the current collector (the terminal part) arranged at the inward more than the outer surface of the case.

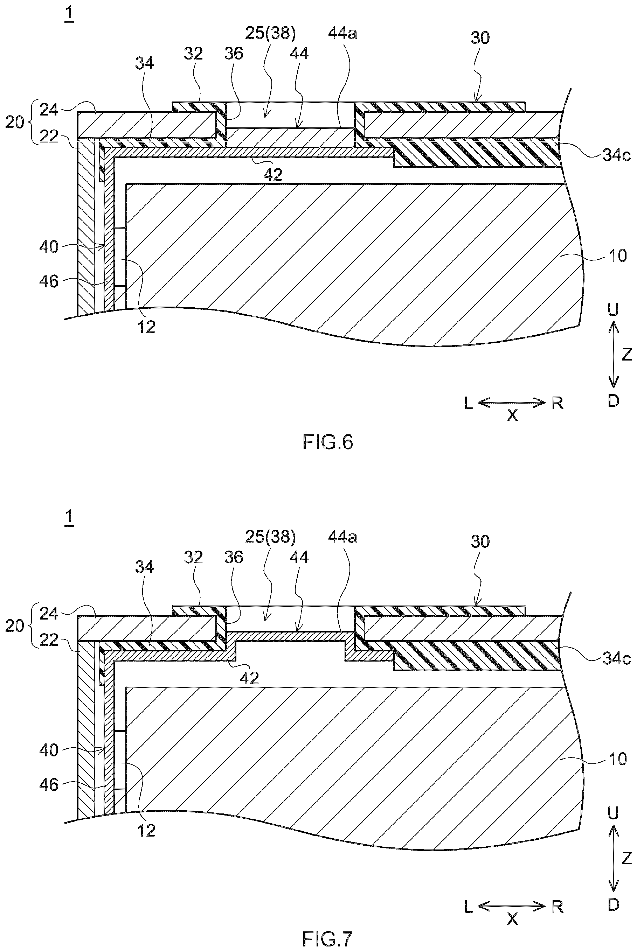

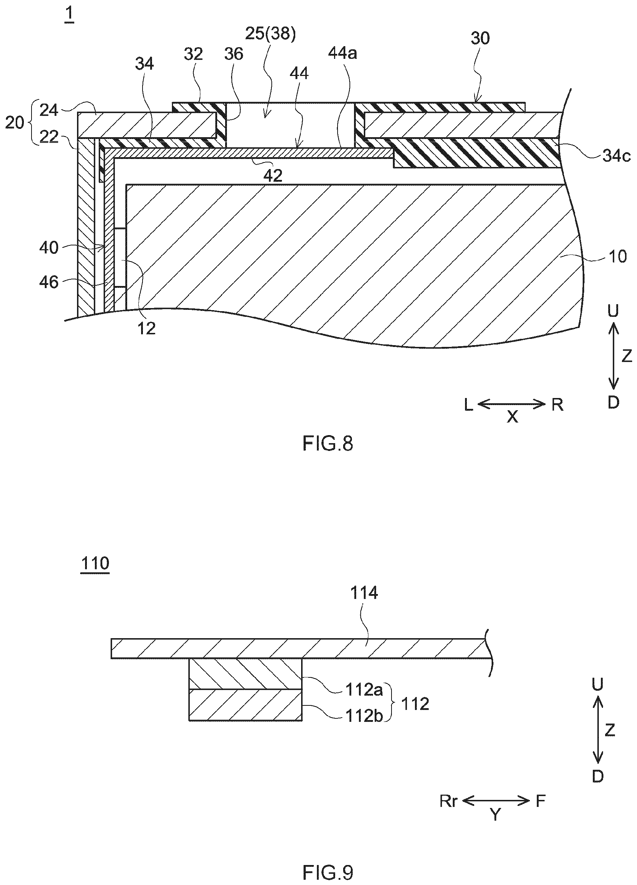

Above, one embodiment of the herein disclosed technique has been explained. However, the herein disclosed technique is not to be restricted to the above described embodiment. Below, another embodiment of the herein disclosed technique will be described. Incidentally, FIG. 6 is an enlarged cross section view that schematically shows a structure at a vicinity of the terminal attachment hole of the electric storage device in accordance with a second embodiment. FIG. 7 is an enlarged cross section view that schematically shows the structure at the vicinity of the terminal attachment hole of the electric storage device in accordance with a third embodiment. FIG. 8 is an enlarged cross section view that schematically shows the structure at the vicinity of the terminal attachment hole of the electric storage device in accordance with a fourth embodiment. FIG. 9 is a cross section view that shows an example of the bus bar capable of being used in the fourth embodiment.

### <Second embodiment>

As shown in FIG. 2, the terminal part 44 of the first embodiment is a columnar clad material that includes the first layer 47 and the second layer 45. However, the terminal part of the herein disclosed technique is not restricted to the columnar clad material. For example, the terminal part 44 might be a columnar member configured with a single metal material (see FIG. 6). Even in a case where the configuration described above is applied, it is possible to enhance the loading efficiency of the electric storage device 1 if the upper surface 44a of the terminal part 44 is arranged at the inward (the downward D) more than the outer surface 20a of the case 20.

Incidentally, the terminal part 44 configured with the single metal material can be in particular suitably applied, in a case where the joint part 42 and the outside member (the bus bar) are configured with the same material. For example, regarding the current collector 40 of the positive electrode side, in consideration of a connection property with the positive electrode tab (the aluminum foil), aluminum type materials are used on the inside electrical collector part 46 and on the joint part 42. On the other hand, as described above, the aluminum type material is used on the bus bar 110 when the electric storage unit 100 is constructed (see FIG. 4). In a case of including the configuration described above, the electrically conductive passage from the electrode assembly 10 to the bus bar 110 can be constructed with the aluminum type material even if the clad material is not used on the terminal part 44, and thus the electrically conductive passage which is strong and has the low resistance can be formed.

### <Third embodiment>

In addition, regarding the first to second embodiments, the columnar terminal part 44 is joined to the upper surface 42a of the joint part 42 (see FIG. 2 and FIG. 6). However, the terminal part 44 formed in the convex shape is not restricted to the configuration described above. For example, in a case where the joint part 42 is the plate-shaped member, it is also possible by folding and bending the joint part 42 to form the convex-shaped terminal part 44 (see FIG. 7). This convex-shaped terminal part 44 can be molded by performing a press processing on the plate-shaped joint part 42. Even in a case where the terminal part 44 having the above described configuration is inserted into the terminal attachment hole 25, connecting the terminal part 44 and the outside member becomes easy and it is possible to restrict the movement of the current collector 40 in the horizontal direction. In addition, according to the present embodiment, a number of parts of the current collector 40 can be reduced and thus it is possible to contribute in decreasing a material cost.

### <Fourth embodiment>

In addition, regarding the first to third embodiments, the convex-shaped terminal part 44 is inserted into the terminal attachment hole 25. However, the current collector on which the herein disclosed technique is applied might not include the convex-shaped terminal part. For example, as shown in FIG. 8, the joint part 42 and the terminal part 44 might configure a continuous flat surface. Even in a case where this kind of configuration is applied, it is possible by the insulating material 30 and the terminal part 44 to seal the terminal attachment hole 25. Then, even in a case where the above described configuration is applied, the terminal part 44 is exposed to the outer side of the case 20 through the terminal attachment hole 25 and thus it is possible to electrically connect the outside member and the current collector 40. Then, even in this case, the terminal part 44 is arranged at the inward (the downward D) more than the outer surface 20a of the case 20, and thus it is possible to enhance the loading efficiency of the electric storage device of the electric product.

Incidentally, in a case where the fourth embodiment is applied, it is good that a protruding amount of the connection projection of the bus bar is made to be larger. By doing this, it is possible to properly connect the bus bar and the terminal part 44. In addition, as shown in FIG. 9, the connection projection 112 of the bus bar 110 might be configured with the clad material. The connection projection 112 at that time includes a top layer 112a joined to a main body 114 of the bus bar 110 and configured with the same kind of metal as the main body 114, and includes a bottom layer 112b arranged at a downward of the top layer 112a and configured with the same kind of metal as the terminal part 44 of the electric storage device 1. By doing this, even in a case where the terminal part 44 is not the convex-shaped member, it is possible to easily form the electrically conductive passage that is strong and has the low resistance.

Above, the herein disclosed technique has been explained in detail. However, these are merely illustrations, and are not to restrict the scope of claims. The technique recited in claims contains matters in which the above-illustrated specific example is variously deformed or changed. In other words, the herein disclosed technique semantically covers forms recited in below-described item 1 to item 8.

### [Item 1]

An electric storage device, comprising:
an electrode assembly;
a case accommodating the electrode assembly and having a terminal attachment hole;
an insulating material continuously covering a circumferential wall of the terminal attachment hole and a circumferential edge part of the terminal attachment hole in a circumferential direction and joined to the circumferential edge part of the terminal attachment hole; and
a current collector electrically connected to the electrode assembly inside of the case, wherein
the current collector is arranged to cover the terminal attachment hole via the insulating material,
the current collector is joined to the insulating material,
the current collector comprises a terminal part that is exposed to an outer side of the case through the terminal attachment hole and that is capable of being electrically connected to an outside member,
the terminal part is positioned at an inward more than an outer surface of the case, and
the terminal attachment hole is sealed by the insulating material and the current collector.

### [Item 2]

The electric storage device recited in item 1, wherein
the terminal part is a convex-shaped terminal part that is inserted from an inner side of the case into the terminal attachment hole.

### [Item 3]

The electric storage device recited in item 2, wherein
the current collector comprises a joint part that is a plate-shaped member joined to the insulating material, and
the convex-shaped terminal part is a portion formed by folding and bending the joint part.

### [Item 4]

The electric storage device recited in item 2, wherein
the current collector comprises a joint part that is a plate-shaped member joined to the insulating material, and
the convex-shaped terminal part is a columnar member that is joined to an upper surface of the joint part.

### [Item 5]

The electric storage device recited in item 4, wherein
the columnar terminal part comprises:
a first layer that is joined to the upper surface of the joint part and that is configured with a same kind of metal as the joint part; and
a second layer that is exposed to the outer side of the case through the terminal attachment hole and that is configured with a metal different from the first layer.

### [Item 6]

The electric storage device recited in any one of items 1 to 5, further comprising a roughened surface formed on at least one surface among the circumferential edge part of the terminal attachment hole on the outer surface of the case, the circumferential edge part of the terminal attachment hole on an inner surface of the case, a circumferential wall of the terminal attachment hole, and a surface of the current collector joined to the insulating material.

### [Item 7]

An electric storage unit, comprising:
plural electric storage devices; and
plural bus bars that are configured to electrically connect the plural electric storage devices, wherein
at least one of the plural electric storage devices is the electric storage device recited in any one of items 1 to 6, and
the bus bar is joined to the terminal part of the electric storage device.

### [Item 8]

The electric storage unit recited in item 7, wherein
the bus bar is inserted from an outside region of the case into the terminal attachment hole, and comprises a connection projection that is connected to the terminal part of the current collector.

### [Reference signs list]

- 1: Electric storage device
- 10: Electrode assembly
- 12: Connecting tab
- 20: Case
- 22: Case main body
- 24: Sealing plate
- 25: Terminal attachment hole
- 30: Insulating material
- 32: Outside insulating part
- 34: Inside insulating part
- 36: Hole inside insulating part
- 38: Opening part
- 40: Current collector
- 42: Joint part
- 44: Terminal part
- 46: Inside electrical collector part
- 100: Electric storage unit
- 110: Bus bar
- 112: Connection projection
- 120: End plate
- 130: Beam material for restriction
- 150: Buffering member

## Claims

1. An electric storage device (1), comprising:
an electrode assembly (10);
a case (20) accommodating the electrode assembly (10) and having a terminal attachment hole (25);
an insulating material (30) continuously covering a circumferential wall (25a) of the terminal attachment hole (25) and a circumferential edge part of the terminal attachment hole (25) in a circumferential direction and joined to the circumferential edge part of the terminal attachment hole (25); and
a current collector (40) electrically connected to the electrode assembly (10) inside of the case (20), wherein
the current collector (40) is arranged to cover the terminal attachment hole (25) via the insulating material (30),
the current collector (40) is joined to the insulating material (30),
the current collector (40) comprises a terminal part (44) that is exposed to an outer side of the case (20) through the terminal attachment hole (25) and that is capable of being electrically connected to an outside member,
the terminal part (44) is positioned at an inward more than an outer surface of the case (20), and
the terminal attachment hole (25) is sealed by the insulating material (30) and the current collector (40).

2. The electric storage device (1) according to claim 1, wherein
the terminal part (44) is a convex-shaped terminal part (44) that is inserted from an inner side of the case (20) into the terminal attachment hole (25).

3. The electric storage device (1) according to claim 2, wherein
the current collector (40) comprises a joint part (42) that is a plate-shaped member joined to the insulating material (30), and
the convex-shaped terminal part (44) is a portion formed by folding and bending the joint part (42).

4. The electric storage device (1) according to claim 2, wherein
the current collector (40) comprises a joint part (42) that is a plate-shaped member joined to the insulating material (30), and
the convex-shaped terminal part (44) is a columnar member that is joined to an upper surface of the joint part (42).

5. The electric storage device (1) according to claim 4, wherein
the columnar terminal part (44) comprises:
a first layer (47) that is joined to the upper surface of the joint part (42) and that is configured with a same kind of metal as the joint part (42); and
a second layer (45) that is exposed to the outer side of the case (20) through the terminal attachment hole (25) and that is configured with a metal different from the first layer (47).

6. The electric storage device (1) according to any one of claims 1 to 5, further comprising a roughened surface formed on at least one surface among the circumferential edge part of the terminal attachment hole (25) on the outer surface of the case (20), the circumferential edge part of the terminal attachment hole (25) on an inner surface of the case (20), a circumferential wall (25a) of the terminal attachment hole (25), and a surface of the current collector (40) joined to the insulating material (30).

7. An electric storage unit (100), comprising:
plural electric storage devices (1); and
plural bus bars (110) that are configured to electrically connect the plural electric storage devices (1), wherein
at least one of the plural electric storage devices (1) is the electric storage device (1) according to any one of claims 1 to 6, and
the bus bar (110) is joined to the terminal part (44) of the electric storage device (1).

8. The electric storage unit (100) according to claim 7, wherein
the bus bar (110) is inserted from an outside region of the case (20) into the terminal attachment hole (25), and comprises a connection projection (112) that is connected to the terminal part (44) of the current collector (40).
